# EUROPÄISCHE PATENTSCHRIFT

(11) **EP 4 326 092 B1**
(45) Veröffentlichungstag und Bekanntmachung des Hinweises auf die Patenterteilung: **12.08.2026**
(21) Anmeldenummer: 22724093.4
(22) Anmeldetag: 21.04.2022
(51) Int. Cl.: A23L 33/105, C13B 10/02, C13B 10/12, G01N 21/359

(54) **VERFAHREN ZUR ERZEUGUNG VON DÜNNSAFT FÜR DIE HERSTELLUNG VON ZUCKER UND ZUCKERPRODUKTIONSANLAGE**
PROCESS FOR PRODUCING THIN JUICE FOR SUGAR PRODUCTION AND SUGAR PRODUCTION PLANT
PROCÉDÉ DE PRODUCTION DE JUS MINCE DESTINÉ À LA FABRICATION DE SUCRE ET INSTALLATION DE PRODUCTION DE SUCRE

(30) Priorität: 23.04.2021 EP 21170220
(43) Veröffentlichungstag der Anmeldung: 28.02.2024
(73) Patentinhaber: Pfeifer & Langen IP GmbH, 50858 Köln (DE)
(72) Erfinder: BURKHARDT, Mark-Oliver, 64319 Pfungstadt (DE); KLOSTERHALFEN, Wolfgang, 50170 Kerpen (DE)
(74) Vertreter: Kutzenberger Wolff & Partner
(86) Internationale Anmeldenummer: PCT/EP2022/060613
(87) Internationale Veröffentlichungsnummer: WO 2022/223727

(56) Entgegenhaltungen:
- EP-B1- 1 682 683
- WO-A1-2004/076696
- WO-A1-2013/049905
- CA-A- 350 090
- DE-A1- 102017 113 132
- US-A1- 2005 214 419
- US-A1- 2010 285 186
- US-B1- 6 630 672
- FEVOTTE G: "Applications of NIR spectroscopy to monitoring and analyzing the solid state during industrial crystallization processes", INTERNATIONAL JOURNAL OF PHARMACEUTICS, vol. 273, no. 1-2, 1 April 2004 (2004-04-01), NL, pages 159 - 169, XP055846270, ISSN: 0378-5173, DOI: 10.1016/j.ijpharm.2004.01.003

## Beschreibung

### Stand der Technik

Die vorliegende Erfindung betrifft ein Verfahren zur Erzeugung von Dünnsaft für die Herstellung von Zucker, wobei einem Rohsaft - in einem ersten Kalkungsschritt - zunächst Kalkmilch zugegeben wird, um eine Mischung aus Rohsaft und Kalkmilch zu erhalten, und der Mischung aus Rohsaft und Kalkmilch dann - in einem ersten Karbonatisierungsschritt - Kohlendioxid zugegeben wird, um eine Mischung aus Rohsaft und ausgefällten Nichtzuckerstoffen zu erhalten, und die Mischung aus Rohsaft und ausgefällten Nichtzuckerstoffen anschließend - in einem ersten Filtrierungsschritt - gefiltert wird, um einen ersten Dünnsaft zu erhalten. Ferner betrifft die Erfindung ein Verfahren zur Herstellung von Zucker. Ein weiterer Gegenstand der Erfindung ist eine Zuckerproduktionsanlage mit einer Einrichtung zur Saftreinigung, die dazu eingerichtet ist, einem Rohsaft - in einem ersten Kalkungsschritt - zunächst Kalkmilch zuzugeben, um eine Mischung aus Rohsaft und Kalkmilch zu erhalten, und der Mischung aus Rohsaft und Kalkmilch dann - in einem ersten Karbonatisierungsschritt - Kohlendioxid zuzugeben, um eine Mischung aus Rohsaft und ausgefällten Nichtzuckerstoffen zu erhalten, und die Mischung aus Rohsaft und ausgefällten Nichtzuckerstoffen anschließend - in einem ersten Filtrierungsschritt - zu filtern, um einen ersten Dünnsaft zu erhalten.

Im Rahmen der industriellen Zuckerproduktion wird aus Pflanzen mit hohem Zuckergehalt, wie beispielsweise Zuckerrüben oder Zuckerrohr, ein Rohsaft extrahiert. Dies kann durch einen Diffusionsprozess oder bei Zuckerrohr auch durch Pressextraktion erfolgen. Der bei der Extraktion entstehende Rohsaft weist allerdings noch eine Vielzahl an Nichtzuckerstoffen auf. Diese Nichtzuckerstoffe werden in einem Reinigungsprozess teilweise entfernt, der als Saftreinigung bezeichnet wird. Hierbei wird der Rohsaft mit Kalkmilch versetzt, um anschließend durch Zugabe von Kohlendioxid Kalk und Nichtzuckerstoffe auszufällen. Diese werden ausgefiltert, um als Filtrat einen Dünnsaft zu erhalten. Der Dünnsaft wird in nachfolgenden Prozessschritten eingedickt und der enthaltene Zucker kristallisiert und abgetrennt.

Die Zuckerproduktion, insbesondere der Saftreinigungsprozess, erfordert eine sorgfältige Einstellung und ggf. Nachführung von Prozessparametern. Es ist daher erforderlich, Inhaltsstoffe in dem Rohsaft und/oder in dem Dünnsaft zu ermitteln. Hierzu ist es gemäß dem Stand der Technik üblich, Proben zu entnehmen und diese in einem Labor zu untersuchen. Die Probenentnahme und anschließende Untersuchung im Labor ist mit einer gewissen Durchlaufzeit verbunden, die abgewartet werden muss, bevor die Ergebnisse der Analyse zur Verfügung stehen und Reaktionen, z.B. eine Nachführung von Prozessparametern möglich ist.

In der DE 10 2017 113 132 A1 wird ein Verfahren zur Verbesserung der Ausbeute bei der Zuckerherstellung beschrieben, bei der in einer Extraktionsanlage Schnitzel und Zuckerrohsaft erzeugt werden, unter Anwendung von Ultraschall, wobei vor einer ersten Carbonationsstufe der Zuckerrohsaft über eine Ultraschalleinheit geleitet wird. Durch Aufbrechen von Dextranen mittels Ultraschall, der im Zuckerrohsaft Kavitation erzeugt, werden die langkettigen Moleküle aufgebrochen. Eine mit der Ultraschalleinheit verbundene Regel- und Steuereinheit ermöglicht es, gemessene Daten einer Sensorik auszuwerten und über entsprechenden Signale als geeignete Führungsgrößen die Ultraschalleinheit zu steuern und zu regeln. Die CA 350 090 A beschreibt die Steuerung der CO₂-Gas-Zugabe bei der Zuckerherstellung in Abhängigkeit von einer Messung des elektrischen Widerstands des behandelten Safts.

### Offenbarung der Erfindung

Vor diesem Hintergrund ist es Aufgabe der vorliegenden Erfindung, eine Nachführung von Prozessparametern mit geringerer Latenz zu ermöglichen.

Zur Lösung der Aufgabe wird ein Verfahren zur Erzeugung von Dünnsaft für die Herstellung von Zucker nach Anspruch 1 vorgeschlagen, wobei
einem Rohsaft - in einem ersten Kalkungsschritt - zunächst Kalkmilch zugegeben wird, um eine Mischung aus Rohsaft und Kalkmilch zu erhalten, und
der Mischung aus Rohsaft und Kalkmilch dann - in einem ersten Karbonatisierungsschritt - Kohlendioxid zugegeben wird, um eine Mischung aus Rohsaft und ausgefällten Nichtzuckerstoffen zu erhalten, und
die Mischung aus Rohsaft und ausgefällten Nichtzuckerstoffen anschließend - in einem ersten Filtrierungsschritt - gefiltert wird, um einen ersten Dünnsaft zu erhalten,
optional dem ersten Dünnsaft - in einem zweiten Kalkungsschritt - Kalkmilch zugegeben wird, um eine Mischung aus erstem Dünnsaft und Kalkmilch zu erhalten, und
optional dem ersten Dünnsaft oder der Mischung aus erstem Dünnsaft und Kalkmilch - in einem zweiten Karbonatisierungsschritt - Kohlendioxid zugegeben wird, um eine Mischung aus erstem Dünnsaft und ausgefällten Nichtzuckerstoffen zu erhalten und die Mischung aus erstem Dünnsaft und ausgefällten Nichtzuckerstoffen - in einem zweiten Filtrierungsschritt - gefiltert wird, um einen zweiten Dünnsaft zu erhalten,
wobei
mit mindestens einer ersten Sensoreinrichtung erste Messdaten betreffend die Mischung aus Rohsaft und Kalkmilch und/oder die Mischung aus erstem Dünnsaft und Kalkmilch während oder nach dem ersten bzw. zweiten Kalkungsschritt erfasst werden und/oder
mit mindestens einer zweiten Sensoreinrichtung zweite Messdaten betreffend die Mischung aus Rohsaft und ausgefällten Nichtzuckerstoffen und/oder die Mischung aus erstem Dünnsaft und ausgefällten Nichtzuckerstoffen während oder nach dem ersten bzw. zweiten Karbonatisierungsschritt erfasst werden und/oder
mit mindestens einer dritten Sensoreinrichtung dritte Messdaten betreffend den ersten und/oder zweiten Dünnsaft erfasst werden.

Bei dem erfindungsmäßen Verfahren werden eine Sensoreinrichtung oder mehrere Sensoreinrichtungen eingesetzt, um Messdaten betreffend die jeweilige Mischung während oder nach dem ersten und/oder zweiten Kalkungsschritt und/oder Mischung während oder nach dem ersten und/oder zweiten Karbonatisierungsschritt und/oder den ersten und/oder zweiten Dünnsaft zu erfassen. Diese Sensoreinrichtung(en) ermöglichen die Bestimmung von Inhaltsstoffen des Rohsafts bzw. Dicksafts, ohne dass eine zeitaufwändige Probenentnahme und Untersuchung in einem Labor erforderlich ist. Vielmehr ist es mit dem erfindungsgemäßen Verfahren möglich, die Bestimmung der Inhaltsstoffe im laufenden Produktionsprozess durchzuführen, ohne Rohsaft und/oder Dünnsaft zu entnehmen. Durch die Sensoreinrichtung(en) wird ferner die Analyse und/oder die Steuerung der Saftreinigung und/oder anderer Einrichtungen bzw. Verfahrensschritte im Zuckerproduktionsprozess mit geringer Latenz ermöglicht.

Bevorzugt wird in dem ersten und/oder zweite Karbonatisierungsschritt zusätzlich Soda bzw. Natronlauge zugegeben, um Nichtzuckerstoffe auszufällen, und die Härte des Dünnsaftes einzustellen. Der erste und/oder zweite Filtrierungsschritt kann einstufig oder mehrstufig ausgebildet sein.

Gemäß einer vorteilhaften Ausgestaltung der Erfindung ist vorgesehen, dass mindestens ein Prozessparameter des ersten und/oder zweiten Kalkungsschritts und/oder des ersten und/oder zweiten Karbonatisierungsschritts und/oder des ersten und/oder zweiten Filtrierungsschritts in Abhängigkeit von den ersten Messdaten und/oder den zweiten Messdaten und/oder dritten Messdaten eingestellt wird. Das Einstellen der Prozessparameter in Abhängigkeit von den durch eine oder mehrere der Sensoreinrichtung(en) erfassten Messdaten kann ein Nachführen von Prozessparametern der Saftreinigung mit geringer Latenz erfolgen. Bei dem mindestens einen Prozessparameter kann es sich beispielsweise um eine Kalkmilchzugabemenge und/oder einen Sollwert des pH-Werts und/oder eine Konzentration der Kalkmilch und/oder eine Zugabemenge von gefälltem Calciumcarbonat (engl. *precipitated calcium carbonate,* kurz PCC) und/oder eine Schlammsaftrücknahmemenge und/oder einen Betriebsparameter eines Filters handeln.

Gemäß des erfindungsgemäßen Verfahrens ist vorgesehen, dass
die erste Sensoreinrichtung eine erste optische Bilderfassungsvorrichtung aufweist und die ersten Messdaten erste Bilddaten umfassen und/oder
die zweite Sensoreinrichtung eine zweite optische Bilderfassungsvorrichtung aufweist und die zweiten Messdaten zweite Bilddaten umfassen und/oder
die dritte Sensoreinrichtung eine dritte optische Bilderfassungsvorrichtung aufweist und die dritten Messdaten dritte Bilddaten umfassen.

Anhand der ersten, zweiten und/oder dritten Bilddaten ist es möglich, eine oder mehrere geometrische Eigenschaften der in dem jeweiligen Rohsaft bzw. dem Dünnsaft enthaltenen Partikel und/oder Lufteinschlüsse zu ermitteln. Beispielsweise kann als geometrische Eigenschaft eine Flockenform der Partikel ermittelt werden. Alternativ oder zusätzlich können anhand der ersten, zweiten und/oder dritten Bilddaten kinetische Eigenschaften der in dem jeweiligen Rohsaft bzw. dem Dünnsaft enthaltenen Partikel und/oder Lufteinschlüsse ermittelt werden, z. B. eine Absinkgeschwindigkeit.

Bevorzugt wird anhand der ersten, zweiten und/oder dritten Bilddaten eine Farbe einer flüssigen Phase des jeweiligen Rohsafts bzw. Dünnsafts ermittelt. Besonders bevorzugt wird im ersten und/oder zweiten Kalkungsschritt eine Kalkmilchzugabemenge in Abhängigkeit von der ermittelten Flockenform der Partikel und/oder der ermittelten Farbe der flüssigen Phase eingestellt. Hierdurch kann einer unerwünschten Überdosierung der Kalkmilch entgegengewirkt werden. Alternativ oder zusätzlich wird eine Zugabemenge an Dextranase in Abhängigkeit von der ermittelten Flockenform der Partikel und/oder der ermittelten Farbe der flüssigen Phase eingestellt.

Gemäß einer vorteilhaften Ausgestaltung des erfindungsgemäßen Verfahrens ist vorgesehen, dass
die erste Sensoreinrichtung eine erste Nahinfrarotspektroskopie-Vorrichtung aufweist und die ersten Messdaten eine erste Gehaltsangabe eines Inhaltsstoffs umfassen und/oder
die zweite Sensoreinrichtung eine zweite Nahinfrarotspektroskopie-Vorrichtung aufweist und die zweiten Messdaten eine zweite Gehaltsangabe eines Inhaltsstoffs umfassen und/oder
die dritte Sensoreinrichtung eine dritte Nahinfrarotspektroskopie-Vorrichtung aufweist und die dritten Messdaten eine dritte Gehaltsangabe eines Inhaltsstoffs umfassen.

Die eine oder die mehreren Nahinfrarotspektroskopie-Vorrichtung(en) - auch NIRS-Vorrichtung(en) bezeichnet - erfassen Messdaten, aus denen Rückschlüsse auf die Inhaltsstoffe des untersuchten Rohsafts bzw. Dünnsafts gezogen werden können. Die jeweilige NIRS-Vorrichtung macht dabei Gebrauch von einem Verfahren, bei dem der zu untersuchende Saft mit elektromagnetischer Strahlung im nahen Infrarotbereich bestrahlt wird, z.B. in einem Spektralbereich von 400 nm bis 2.500 nm. Durch derartige Bestrahlung kann es zur Anregung von Molekülschwingungen in dem untersuchten Material kommen. Die durch die Molekülschwingungen ausgelöste elektromagnetische Strahlung im Nahinfrarotbereich, z.B. in einem Spektralbereich von 400 nm bis 2.500 nm, wird detektiert und spektroskopisch aufgelöst. Aus den erfassten Spektren können Art und/oder Menge von Inhaltstoffen der untersuchten Materialien ermittelt werden. Die Messdaten der Nahinfrarotspektroskopie-Vorrichtung(en) können beispielsweise den Nachweis folgender Inhaltsstoffe bzw. deren Gehalt angeben: Sacharose, Fructose, Glucose, Milchsäure, Oxalsäure, Oxalate, Nitrate, Nitrite, Pektine, Dextrane, Stickstoff. Bevorzugt können die mit der jeweiligen Nahinfrarotspektroskopie-Vorrichtung erfassten Messdaten durch mehrere Messungen aus verschiedenen Richtungen hervorgehen. Hierzu kann vorgesehen sein, dass die jeweilige Nahinfrarotspektroskopie-Vorrichtung mehrere Detektoren umfasst, die gegenüber dem untersuchten Material unterschiedlich orientiert angeordnet sind. Durch eine derartige Messung aus mehreren Richtungen können die Inhaltsstoffe mit erhöhter Genauigkeit aus den jeweiligen Messdaten ermittelt werden.

Bevorzugt ist vorgesehen, dass die erste, zweite und/oder dritten Messdaten eine Gehaltsangabe der Pektine und/oder Dextrane umfassen, wobei anhand der Gehaltsangabe der Pektine und/oder Dextrane eine Zustandsangabe zu einem Zustand einer oder mehrerer Filtereinrichtungen, beispielsweise Filterkerzen, ermittelt wird, die in dem Filtrierungsschritt verwendet werden. Bevorzugt werden zur Ermittlung der Zustandsangabe zusätzlich Bilddaten der ersten, zweite und/oder dritten optischen Bilderfassungsvorrichtung herangezogen. Durch eine solche Ermittlung, insbesondere Vorhersage, der Zustandsangabe kann eine Warnung erzeugt werden, die angibt, dass eine Filtereinrichtung gewechselt oder gewartet werden muss. Folglich können unerwünschte Stillstandszeiten der Zuckerproduktionanlage, die sich z.B. durch unerwartete Defekte von Filtereinrichtungen ergeben, vermieden werden.

Bevorzugt ist vorgesehen, dass die erste, zweite und/oder dritten Messdaten eine Gehaltsangabe der Pektine und/oder Dextrane umfassen, wobei anhand der Gehaltsangabe der Pektine und/oder Dextrane einen Zugabemenge an Dextranase ermittelt wird. Dextranase wird typischerweise zugesetzt, um Dextran abzubauen, welches die Filtration und Kristallisation des Zuckers erschweren kann.

Eine vorteilhafte Ausgestaltung der Erfindung sieht vor, dass
die erste Sensoreinrichtung einen ersten Stickstoffsensor aufweist und die ersten Messdaten eine erste Stickstoffkonzentration umfassen und/oder
die zweite Sensoreinrichtung einen zweiten Stickstoffsensor aufweist und die zweiten Messdaten eine zweite Stickstoffkonzentration umfassen und/oder
die dritte Sensoreinrichtung eine dritten Stickstoffsensor aufweist und die dritten Messdaten eine dritte Stickstoffkonzentration umfassen.

Die erfassten Stickstoffkonzentration(en) ermöglichen das Bestimmen von Qualitätsangaben, insbesondere solchen Qualitätsangaben, welche die Farbe des Rohsafts bzw. Dünnsafts betreffen. Die Stickstoffkonzentration(en) können herangezogen werden, um die Farbbildung in der Saftreinigung nachfolgenden Prozessschritten vorherzusagen und/oder Prozessparameter von der Saftreinigung nachfolgende Prozessschritten der Zuckerproduktion einzustellen.

Gemäß einer vorteilhaften Ausgestaltung der Erfindung ist vorgesehen, dass die dritte Sensoreinrichtung einen Trübungs- und/oder Farbsensor aufweist und die dritten Messdaten einen Trübungs- und/oder Farbangabe umfassen. Anhand der Trübungs- und/oder Farbangabe können Rückschlüsse auf die Qualität des Dünnsafts gezogen werden. Bevorzugt wird ein Prozessparameter des ersten und/oder zweiten Filtrierungsschritts in Abhängigkeit von der Trübungs- und/oder Farbangabe eingestellt, beispielsweise ein Betriebsparameter eines Filters.

Gemäß einer vorteilhaften Ausgestaltung des Verfahrens kann alternativ oder zusätzlich vorgesehen sein, dass die dritte Sensoreinrichtung einen Brix-Sensor aufweist und die dritten Messdaten einen Zuckergehalt umfassen. Brix- Messung ist die Bestimmung des Trockensubstanzgehaltes. In Kombination der beiden Messverfahren lässt sich die Reinheit der Zuckerlösung bestimmen.

Als vorteilhaft hat sind eine Ausgestaltung herausgestellt, bei welcher
die erste Sensoreinrichtung in einer ersten Bypass-Leitung angeordnet ist, in welche die Mischung aus Rohsaft und Kalkmilch bzw. die Mischung aus erstem Dünnsaft und Kalkmilch während oder nach dem ersten bzw. zweiten Kalkungsschritt eingeleitet wird und zur Erfassung der ersten Messdaten eine stehende Mischung erzeugt wird, und/oder
die zweite Sensoreinrichtung in einer zweiten Bypass-Leitung angeordnet ist, in welche die Mischung aus Rohsaft und ausgefällten Nichtzuckerstoffen bzw. die Mischung aus erstem Dünnsaft und ausgefällten Nichtzuckerstoffen während oder nach dem ersten bzw. zweiten Karbonatisierungsschritt eingeleitet wird und zur Erfassung der zweiten Messdaten eine stehende Mischung erzeugt wird und/oder
die dritte Sensoreinrichtung in einer dritten Bypass-Leitung angeordnet ist, in welche der erste bzw. zweite Dünnsaft eingeleitet wird und zur Erfassung der dritten Messdaten ein stehender Dünnsaft erzeugt wird.

Die Bypass-Leitung kann sowohl einen Einlass zum Zuführen des zu untersuchenden Safts als auch einen Auslass zum Zurückführen des untersuchten Safts nach der Messung in den Produktionsprozess umfassen. Insofern bildet die Bypass-Leitung eine an einer bestimmten Stelle des Produktionsablaufs einen zum regulären Produktionsfluss parallelen Pfad. In dem stehenden Rohsaft bzw. Dünnsaft kann eine Messung durch eine optische Bilderfassungsvorrichtung und/oder eine Nahinfrarotspektroskopie-Vorrichtung und/oder einen Stickstoffsensor und/oder einen Trübungs- und/oder Farbsensor mit erhöhter Genauigkeit erfolgen, das störende Effekte, die durch eine Fließdynamik des jeweiligen Safts erzeugt werden können, verringert sind. Zudem kann - insbesondere im Hinblick auf einen Stickstoffsensor - in der Bypass-Leitung eine Aufbereitung des zu untersuchenden Safts erfolgen. Beispielsweise kann der zu untersuchende Saft verdünnt werden und/oder es können Reagenzien hinzugefügt werden.

In diesem Zusammenhang ist es vorteilhaft, wenn nach der Durchführung einer Messung in der ersten, zweiten und/oder dritten Bypass-Leitung eine Selbstreinigungsprozedur zur Reinigung der Bypass-Leitung durchgeführt wird. Im Rahmen dieser Selbstreinigungsprozedur können insbesondere Kalkbeläge und/oder Calciumoxalat entfernt werden. Die Selbstreinigungsprozedur umfasst bevorzugt einen Trennschritt, in welchem die Bypass-Leitung fluidisch von dem regulären Prozessfluss getrennt wird, beispielsweise indem ein Einlass der Bypass-Leitung und ein Auslass der Bypass-Leitung verschlossen werden. Die Reinigung der Bypass-Leitung kann mit einem Reinigungsmedium, insbesondere einer Säure, erfolgen. Das Reinigungsmedium kann über einen von dem Einlass und dem Auslass separat ausgeführten Reinigungsmedium-Einlass bzw. Reinigungsmedium-Auslass eingeleitet bzw. abgezogen werden.

Gemäß einer vorteilhaften Ausgestaltung des erfindungsgemäßen Verfahrens ist vorgesehen, dass anhand der ersten Messdaten, insbesondere ersten Bilddaten, und/oder der zweiten Messdaten, insbesondere zweiten Bilddaten, und/oder dritten Messdaten, insbesondere dritten Bilddaten, eine Partikelgröße von Partikeln bestimmt wird. Die Partikelgröße kann beispielsweise angegeben werden durch eine Länge und/oder eine Breite und/oder eine Querschnittsfläche und/oder ein Durchmesser und/oder ein Äquivalentdurchmesser und/oder ein Umfang. Dabei kann die Partikelgröße eine mittlere Partikelgröße oder ein Median der Partikelgröße sein, also insbesondere ein Mittelwert oder Median einer Länge und/oder einer Breite und/oder einer Querschnittsfläche und/oder eines Durchmessers und/oder eines Äquivalentdurchmessers und/oder eines Umfangs. Bevorzugt wird in Abhängigkeit der ermittelten Partikelgröße mindestens ein Prozessparameter des ersten bzw. zweiten Kalkungsschritts und/oder des ersten bzw. zweiten Karbonisierungsschritts und/oder des ersten bzw. zweiten Filtrierungsschritts eingestellt.

Gemäß einer vorteilhaften Ausgestaltung des erfindungsgemäßen Verfahrens ist vorgesehen, dass anhand der ersten Messdaten, insbesondere ersten Bilddaten, und/oder der zweiten Messdaten, insbesondere zweiten Bilddaten, und/oder dritten Messdaten, insbesondere dritten Bilddaten, eine Absinkgeschwindigkeit von Partikeln bestimmt wird. Bevorzugt wird in Abhängigkeit der ermittelten Absinkgeschwindigkeit mindestens ein Prozessparameter des ersten bzw. zweiten Kalkungsschritts und/oder des Karbonatisierungsschritts und/oder des Filtrierungsschritts in Abhängigkeit eingestellt.

Gemäß einer vorteilhaften Ausgestaltung des erfindungsgemäßen Verfahrens ist vorgesehen, dass anhand der ersten Messdaten, insbesondere ersten Bilddaten, und/oder der zweiten Messdaten, insbesondere zweiten Bilddaten, und/oder dritten Messdaten, insbesondere dritten Bilddaten, ein Kristallhabitus von Calciumcarbonat bestimmt wird. Bevorzugt wird in Abhängigkeit des ermittelten Kristallhabitus mindestens ein Prozessparameter des ersten bzw. zweiten Kalkungsschritts und/oder des ersten bzw. zweiten Karbonatisierungsschritts und/oder des ersten bzw. zweiten Filtrierungsschritts eingestellt.

Zur Lösung eingangs genannter Aufgabe wird ferner ein Verfahren zur Herstellung von Zucker vorgeschlagen, wobei gemäß einem vorstehend beschriebenen Verfahren Dünnsaft hergestellt wird und in nachfolgenden Prozessschritten aus dem Dünnsaft Zucker hergestellt wird.

Bei dem Verfahren zur Herstellung von Zucker können dieselben Vorteile erreicht werden, die bereits im Zusammenhang mit dem Verfahren zur Erzeugung von Dünnsaft beschrieben worden sind.

Gemäß einer vorteilhaften Ausgestaltung des Verfahrens zur Herstellung von Zucker ist vorgesehen, dass mindestens ein Prozessparameter eines der nachfolgenden Prozessschritte in Abhängigkeit von den ersten Messdaten und/oder den zweiten Messdaten und/oder dritten Messdaten eingestellt wird. Das Einstellen der Prozessparameter in Abhängigkeit von den durch eine oder mehrere der Sensoreinrichtung(en) erfassten Messdaten kann ein Nachführen von Prozessparametern eines der nachfolgenden Prozessschritte mit geringer Latenz erfolgen.

Bevorzugt ist vorgesehen, dass der nachfolgende Prozessschritt ein Eindickungsschritt oder ein Kristallisationsschritt oder ein Trennschritt ist. In dem Eindickungsschritt und/oder Kristallisationsschritt kann als Prozessparameter beispielsweise eine Eindampftemperatur beim Eindicken des Dünnsafts und/oder eine Verweilzeit beim Eindicken des Dünnsafts und/oder eine Anzahl an Kristallisationsschritten des beim Eindicken gebildeten Dicksafts eingestellt werden.

Gemäß einer vorteilhaften Ausgestaltung des Verfahrens zur Herstellung von Zucker ist vorgesehen, dass zur Bereitstellung des Rohsafts ein Extraktionsschritt durchgeführt wird, um den Rohsaft aus Zuckerrübenschnitzeln zu erhalten, wobei mindestens ein Prozessparameter des Extraktionsschritts in Abhängigkeit von den ersten Messdaten und/oder den zweiten Messdaten und/oder dritten Messdaten eingestellt wird. Bei dem Prozessparameter des Extraktionsschritts kann es sich beispielsweise um eine Extraktionszeit handeln, die angibt, für welche Dauer die Zuckerrübenschnitzel in der Extraktionseinrichtung verweilen und/oder eine Extraktionstemperatur, die angibt, bei welcher Temperatur die Extraktionseinrichtung betrieben wird.

Eine vorteilhafte Ausgestaltung des Verfahrens zur Herstellung von Zucker sieht vor, dass die Zuckerrübenschnitzel mit einer Schneidemaschine aus Zuckerrüben geschnitten werden und ein Prozessparameter der Schneidemaschine in Abhängigkeit von den ersten Messdaten und/oder den zweiten Messdaten und/oder dritten Messdaten eingestellt wird. Hierdurch kann ein Nachführen von Prozessparametern der Schneidemaschine mit geringer Latenz erfolgen.

Neben den vorstehend erläuterten vorteilhaften Ausgestaltungen können bei dem Verfahren zu Herstellung von Zucker auch die im Zusammenhang mit dem Verfahren zur Erzeugung von Dünnsaft beschriebenen vorteilhaften Ausgestaltungen und Merkmale allein oder in Kombination Anwendung finden.

Die Erfindung betrifft ferner eine Zuckerproduktionsanlage gemäß Anspruch 15 mit einer Einrichtung zur Saftreinigung, die dazu eingerichtet ist,
einem Rohsaft - in einem ersten Kalkungsschritt - zunächst Kalkmilch zuzugeben, um eine Mischung aus Rohsaft und Kalkmilch zu erhalten, und
der Mischung aus Rohsaft und Kalkmilch dann - in einem ersten Karbonatisierungsschritt - Kohlendioxid zuzugeben, um eine Mischung aus Rohsaft und ausgefällten Nichtzuckerstoffen zu erhalten, und
die Mischung aus Rohsaft und ausgefällten Nichtzuckerstoffen anschließend - in einem ersten Filtrierungsschritt - zu filtern, um einen ersten Dünnsaft zu erhalten,
optional dem ersten Dünnsaft (17) - in einem zweiten Kalkungsschritt (3') - Kalkmilch zugegeben wird, um eine Mischung aus erstem Dünnsaft und Kalkmilch (25) zu erhalten, und
optional dem ersten Dünnsaft (17) oder der Mischung aus erstem Dünnsaft und Kalkmilch (25) - in einem zweiten Karbonatisierungsschritt (4') - Kohlendioxid zugegeben wird, um eine Mischung aus erstem Dünnsaft und ausgefällten Nichtzuckerstoffen (26) zu erhalten und die Mischung aus erstem Dünnsaft und ausgefällten Nichtzuckerstoffen (26) - in einem zweiten Filtrierungsschritt (5') - gefiltert wird, um einen zweiten Dünnsaft (27) zu erhalten, gekennzeichnet durch
mindestens eine erste Sensoreinrichtung zur Erfassung erster Messdaten betreffend die Mischung aus Rohsaft und Kalkmilch und/oder die Mischung aus erstem Dünnsaft und Kalkmilch während oder nach dem ersten bzw. zweiten Kalkungsschritt und/oder
eine zweite Sensoreinrichtung zur Erfassung zweiter Messdaten betreffend die Mischung aus Rohsaft und ausgefällten Nichtzuckerstoffen und/oder die Mischung aus erstem Dünnsaft und ausgefällten Nichtzuckerstoffen während oder nach dem ersten bzw. zweiten Karbonatisierungsschritt und/oder
eine dritte Sensoreinrichtung zur Erfassung dritter Messdaten betreffend den ersten bzw. zweiten Dünnsaft, wobei die erste Sensoreinrichtung (21) eine erste optische Bilderfassungsvorrichtung aufweist und die ersten Messdaten erste Bilddaten umfassen und/oder die zweite Sensoreinrichtung (22) eine zweite optische Bilderfassungsvorrichtung aufweist und die zweiten Messdaten zweite Bilddaten umfassen und/oder die dritte Sensoreinrichtung (23) eine dritte optische Bilderfassungsvorrichtung aufweist und die dritten Messdaten dritte Bilddaten umfassen, wobei anhand der ersten, zweiten und/oder dritten Bilddaten eine geometrische Eigenschaft der in dem jeweiligen Rohsaft bzw. dem Dünnsaft enthaltenen Partikel und/oder Lufteinschlüsse ermittelbar ist.

Bei der Zuckerproduktionsanlage können dieselben Vorteile erreicht werden, die bereits im Zusammenhang mit dem Verfahren zur Herstellung von Zucker beschrieben worden sind.

Bei der Zuckerproduktionsanlage können die im Zusammenhang mit den vorstehend erläuterten Verfahren beschriebenen vorteilhaften Ausgestaltungen und Merkmale allein oder in Kombination Anwendung finden.

Weitere Einzelheiten, Merkmale und Vorteile der Erfindung ergeben sich aus den Zeichnungen, sowie aus der nachfolgenden Beschreibung einer bevorzugten Ausführungsform anhand der Zeichnungen. Die Zeichnungen illustrieren dabei lediglich eine beispielhaft Ausführungsform der Erfindung, welche den Erfindungsgedanken nicht einschränkt.

### Kurze Beschreibung der Figuren

Die **Fig. 1** zeigt ein Verfahren zur Herstellung von Zucker gemäß einem ersten Ausführungsbeispiel der Erfindung.
Die **Fig. 2** zeigt ein Verfahren zur Erzeugung von Dünnsaft gemäß einem ersten Ausführungsbeispiel der Erfindung.
Die **Fig. 3** zeigt ein Verfahren zur Herstellung von Zucker gemäß einem zweiten Ausführungsbeispiel der Erfindung.
Die **Fig. 4** zeigt ein Verfahren zur Erzeugung von Dünnsaft gemäß einem zweiten Ausführungsbeispiel der Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

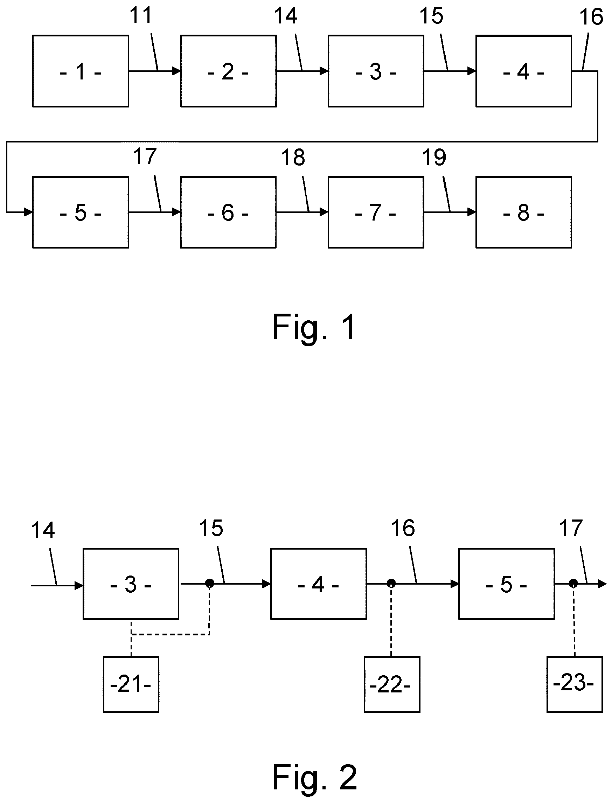

Das in Fig. 1 dargestellte Ablaufdiagramm zeigt ein erstes Ausführungsbeispiel eines erfindungsgemäßen Verfahrens zur Herstellung von Zucker, das in einer Zuckerproduktionsanlage durchgeführt wird. Bei dem Ausführungsbeispiel werden als Ausgangsstoff Zuckerrüben verwendet. Die in der Zuckerproduktionsanlage angelieferten Zuckerrüben werden bevorzugt zunächst gereinigt, also von Anhaftungen, wie beispielsweise Erde, Sand oder Blättern zu befreien. In einem ersten Verfahrensschritt des Schneidens 1 werden die Zuckerrübendurch eine Schneidemaschine zerkleinert, um Zuckerrübenschnitzel 11 zu erhalten.

Die Zuckerrübenschnitzel 11 werden in einem dem Schneiden 1 nachfolgenden Verfahrensschritt der Extraktion 2 oder Saftgewinnung in einer Extraktionseinrichtung durch Wasser ausgelaugt. Optional können die Zuckerrübenschnitzel 11 zunächst vorgewärmt werden, beispielsweise in einem Bereich von 60 °C bis 80 °C, um die Zellwände durchlässiger zu machen. Die eigentliche Extraktion 2 erfolgt in einem Gegenstromverfahren, bei welchem die Zuckerrübenschnitzel 11 im Gegenstrom zu heißem Wasser durch die Extraktionseinrichtung gefördert bzw. geleitet werden. Als Produkt der Extraktion 2 wird neben Zuckerrübenschnitzelresten der Rohsaft 14 erhalten, welcher fast den gesamten in den Zuckerrüben enthaltenen Zucker enthält.

Gemäß einer Abwandlung des Ausführungsbeispiels kann als Ausgangsstoff Zuckerrohr verwendet werden. Das Zuckerrohr wird dabei zunächst geschnitten und kann dann ebenfalls einem Extraktionsschritt 2 zugeführt werden, um Rohsaft 14 mit einem Diffusionsprozess zu extrahieren. Alternativ kann der Rohsaft durch Pressextration - also durch Pressen des Zuckerrohrs bzw. der Zuckerrohrschnitzel erhalten werden.

Dem Rohsaft 14 wird in einem Verfahrensschritt der Kalkung 3 Kalk in Form von Kalkmilch zugesetzt. Der Kalk bindet in dem Rohsaft 14 enthaltene Nichtzuckerstoffe. Säuren werden neutralisiert und der pH-Wert angehoben.

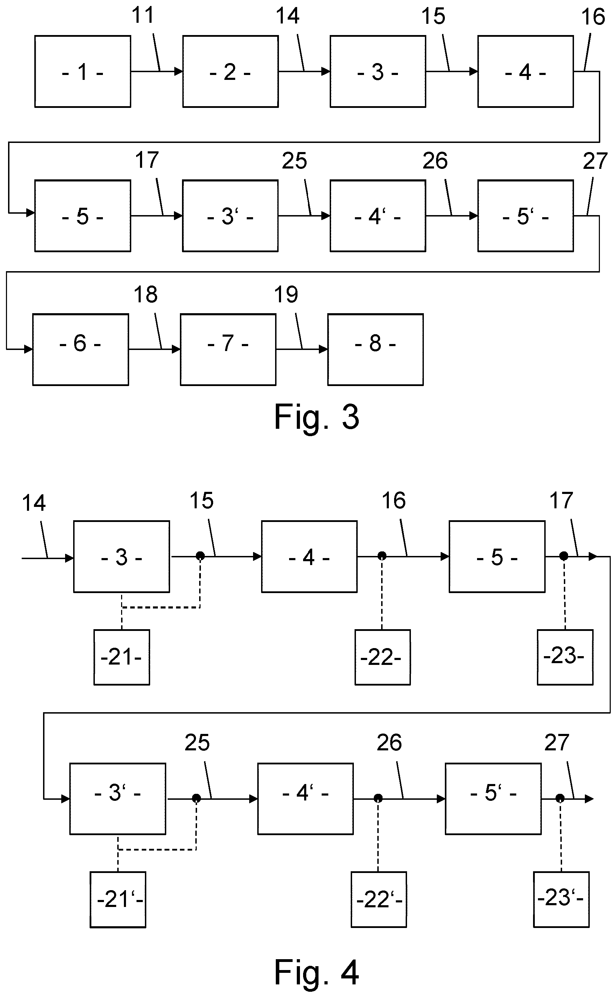

In dem anschließenden Verfahrensschritt der Karbonatisierung 4 wird Kohlendioxid in die Mischung 15 aus Rohsaft und Kalkmilch eingeleitet. Calcium und andere Nichtzuckerstoffe werden gebunden und fallen als Kalk (Calciumcarbonat) aus. In den anschließenden Verfahrensschritt der Filtration 5 wird der Kalk dann abgetrennt und es verbleibt der Dünnsaft 17. Die Verfahrensschritte der Kalkung 3, Karbonatisierung 4 und Filtration 5 werden zusammen auch aus Saftreinigung bezeichnet. Die Schritte Kalkung 3, Karbonatisierung 4 und Filtration 5 können optional in dieser Reihenfolge mehrmals, beispielsweise zweimal, hintereinander durchgeführt werden, um das Reinigungsergebnis zu verbessern, vgl. Fig. 3.

Daran schließt sich der Verfahrensschritt der Eindickung 6 an, in welchem der Dünnsaft 17 in einem meist mehrstufigen Erwärmungsprozess eingedickt wird, um den Dicksaft 18 zu erhalten.

Aus dem Dicksaft 18 wird in einem Verfahrensschritt der Kristallisation 7 bei hoher Temperatur und Unterdruck Zucker auskristallisiert. Die Kristallisation 7 umfasst bevorzugt mehrere aufeinanderfolgende Kristallisationsschritte. Erhalten wird eine Mischung 19 aus Dicksaft und Kristallzucker, die auch als Magma bezeichnet wird.

Schließlich wird in einem in einem Verfahrensschritt des Trennens 8, beispielsweise in einer Zentrifuge, der Kristallzucker abgetrennt.

Bei dem Verfahren gemäß Fig. 1 wird eine erfindungsgemäße Saftreinigung mit den Verfahrensschritten Kalkung 3, Karbonatisierung 4 und Filtration 5 verwendet, die nachfolgend anhand der Darstellung in **Fig. 2** erläutert werden soll.

Bei der Saftreinigung wird dem Rohsaft 14 in dem Kalkungsschritt 3 zunächst Kalkmilch zugegeben, um eine Mischung 15 aus Rohsaft und Kalkmilch zu erhalten. Während des Kalkungsschritts 3 werden mit einer ersten Sensoreinrichtung 21 erste Messdaten betreffend die Mischung aus Rohsaft und Kalkmilch während dem Kalkungsschritt erfasst. Beispielsweise kann der Kalkungsschritt 3 Teilschritt der Vorkalkung umfassen und die erste Sensoreinrichtung 21 kann erste Messdaten betreffend den Rohsaft nach der Vorkalkung erfassen. Bei einer derartigen Ausgestaltung kann der Endpunkt der Vorkalkung durch Auswertung der mit der ersten Sensoreinrichtung 21 erfassten Messdaten bestimmt werden. An den Teilschritt der Vorkalkung kann sich ein Teilschritt der Hauptkalkung anschließen. Optional kann ein zweiter Hauptkalkungsschritt vorgesehen sein. Alternativ kann die erste Sensoreinrichtung 21 nach dem Kalkungsschritt 3 angeordnet sein, so dass Messdaten betreffend die Mischung 15 aus Rohsaft und Kalkmilch erfasst werden.

Die Mischung 15 aus Rohsaft und Kalkmilch wird dann in dem Karbonatisierungsschritt 4 mit Kohlendioxid versetzt. Hierdurch werden Nichtzuckerstoffe ausgefällt. Die sich erhaltene Mischung 16 aus Rohsaft und ausgefällten Nichtzuckerstoffen wird von einer zweiten Sensoreinrichtung 22 erfasst, um zweite Messdaten betreffend die Mischung aus Rohsaft und ausgefällten Nichtzuckerstoffen nach dem Karbonatisierungsschritt zu erhalten. Alternativ kann die zweite Sensoreinrichtung 22 derart angeordnet sein, dass Messdaten während des Karbonatisierungsschritts 4 erfasst werden.

Die Mischung 16 aus Rohsaft und ausgefällten Nichtzuckerstoffen wird anschließend in dem Filtrierungsschritt 5 gefiltert, um den Dünnsaft 17 zu erhalten. Mit einer dritten Sensoreinrichtung 23 werden dritte Messdaten betreffend den Dünnsaft 17 erfasst.

Bei dem Ausführungsbeispiel umfasst die erste Sensoreinrichtung 21 eine optische Bilderfassungsvorrichtung, welche erste Bilddaten erfasst. Die optische Bilderfassungsvorrichtung kann beispielsweise als Kamera, insbesondere als Farbkamera, ausgebildet sein. Mit der optischen Bilderfassungsvorrichtung der ersten Sensoreinrichtung 21 werden erste Bilddaten ermittelt, auf deren Grundlage eine Partikelgröße von in dem Rohsaft enthaltenen Partikeln / Flocken bestimmt wird. Alternativ oder zusätzlich wird eine Absinkgeschwindigkeit der Partikeln bestimmt. Weiter alternativ oder zusätzlich wird eine Flockenform und/oder eine Farbe der Partikel bestimmt. Weiter alternativ oder zusätzlich wird der Kristallhabitus von in dem Rohsaft enthaltenem Calciumcarbonat bestimmt. In Abhängigkeit von den bestimmten Werten - also der Partikelgröße und/oder der Absinkgeschwindigkeit und/oder dem Kristallhabitus wird ein Prozessparameter des Kalkungsschritts eingestellt. Beispielsweise kann die Kalkmilchzugabemenge und/oder ein Sollwert des pH-Werts und/oder eine Konzentration der Kalkmilch und/oder eine Zugabemenge von gefälltem Calciumcarbonat in Abhängigkeit von den bestimmten Werten eingestellt werden. Bevorzugt wird die Kalkmilchzugabemenge und/oder eine Zugabemenge an Dextranase in Abhängigkeit von der ermittelten Flockenform und/oder Farbe der Partikel eingestellt.

Die zweite Sensoreinrichtung 22 gemäß dem Ausführungsbeispiel umfasst eine optische Bilderfassungsvorrichtung, welche zweite Bilddaten erfasst sowie eine Nahinfrarotspektroskopie-Vorrichtung, die Gehaltsangaben zu Inhaltsstoffen der Mischung 16 aus Rohsaft und ausgefällten Nichtzuckerstoffen ermittelt. Dabei handelt es sich um folgende Inhaltsstoffe bzw. deren Gehalt: Sacharose, Fructose, Glucose, Milchsäure, Oxalsäure, Oxalate, Nitrate, Nitrite, Pektine, Dextrane, Stickstoff. In Abhängigkeit von dem ermittelten Gehalt an Dextran wird in der Saftreinigung eine Zugabemenge von Dextranase gesteuert. Ferner wird in Abhängigkeit von dem ermittelten Gehalt an Glucose die Extraktionszeit und/oder Extraktionstemperatur in dem Extraktionsschritt 2 eingestellt. In Abhängigkeit von dem ermittelten Glucosegehalt wird zudem eine Eindampftemperatur beim Eindicken 6 des Dünnsafts 17 und/oder eine Verweilzeit beim Eindicken 6 des Dünnsafts 17 und/oder eine Anzahl an Kristallisationsschritten beim Kristallisieren 7 des Dicksafts 18 eingestellt.

Zudem kann anhand des ermittelten Gehalts an Pektinen und/oder Dextranen sowie der Bilddaten der optischen Bilderfassungsvorrichtung der zweiten Sensoreinrichtung 22 eine Zustandsangabe zu einem Zustand der zum Filtrieren 5 verwendeten Filtereinrichtungen, beispielsweise Filterkerzen, ermittelt werden.

Die dritte Sensoreinrichtung 23 weist eine Nahinfrarotspektroskopie-Vorrichtung, die Gehaltsangaben zu Inhaltsstoffen des Dünnsafts 17 ermittelt sowie einen Trübungs- und/oder Farbsensor und einen Brix-Sensor auf. Die mit der dritten Sensoreinrichtung 23 erfassten Messdaten ermöglichen eine Qualitätskontrolle des Saftreinigungsprozesses 3, 4, 5.

Das in **Fig. 3** dargestellte Ablaufdiagramm zeigt ein zweites Ausführungsbeispiel eines erfindungsgemäßen Verfahrens zur Herstellung von Zucker, das in einer Zuckerproduktionsanlage durchgeführt wird. Das Verfahren gemäß dem zweiten Ausführungsbeispiel entspricht dem ersten Ausführungsbeispiel gemäß Fig. 1 mit dem Unterschied, dass eine zweistufige Saftreinigung 3, 4, 5, 3', 4', 5' durchgeführt wird. Dabei wird dem ersten Dünnsaft 17 in einem zweiten Kalkungsschritt 3' Kalkmilch zugegeben, um eine Mischung aus erstem Dünnsaft und Kalkmilch 25 zu erhalten. Dieser Mischung aus erstem Dünnsaft und Kalkmilch 25 wird dann in einem zweiten Karbonatisierungsschritt 4' Kohlendioxid und bevorzugt Soda bzw. Natronlauge zugegeben, um eine Mischung aus erstem Dünnsaft und ausgefällten Nichtzuckerstoffen 26 zu erhalten. Diese Mischung aus erstem Dünnsaft und ausgefällten Nichtzuckerstoffen 26 wird dann in einem zweiten Filtrierungsschritt 5' gefiltert wird, so dass ein zweiter Dünnsaft 27 erhalten wird. Der zweite Filtrierungsschritt 5' ist dabei bevorzugt mehrstufig, beispielsweise zweistufig, ausgebildet.

Die zweistufige Saftreinigung gemäß Fig. 3 wird nachfolgend anhand der Darstellung in **Fig. 4** näher erläutert.

Im Unterschied zu der Saftreinigung gemäß dem ersten Ausführungsbeispiel ist bei der Saftreinigung des zweiten Ausführungsbeispiels eine weitere erste Sensoreinrichtung 21' vorgesehen, die während des zweiten Kalkungsschritts 3' weitere erste Messdaten betreffend die Mischung aus erstem Dünnsaft und Kalkmilch erfasst. Die weitere erste Sensoreinrichutng 21' umfasst bevorzugt eine optische Bilderfassungsvorrichtung, welche weitere erste Bilddaten erfasst. Die optische Bilderfassungsvorrichtung kann beispielsweise als Kamera, insbesondere als Farbkamera, ausgebildet sein. Mit der optischen Bilderfassungsvorrichtung der weiteren ersten Sensoreinrichtung 21' werden erste Bilddaten ermittelt, auf deren Grundlage eine Partikelgröße von in dem Rohsaft enthaltenen Partikeln bestimmt wird. Alternativ oder zusätzlich wird eine Absinkgeschwindigkeit der Partikeln bestimmt. Weiter alternativ oder zusätzlich wird der Kristallhabitus von in dem Rohsaft enthaltenem Calciumcarbonat bestimmt. In Abhängigkeit von den bestimmten Werten - also der Partikelgröße und/oder der Absinkgeschwindigkeit und/oder dem Kristallhabitus wird ein Prozessparameter des zweiten Kalkungsschritts 3' eingestellt. Beispielsweise kann die Kalkmilchzugabemenge und/oder ein Sollwert des pH-Werts und/oder eine Konzentration der Kalkmilch und/oder eine Zugabemenge von gefälltem Calciumcarbonat in Abhängigkeit von den bestimmten Werten eingestellt werden.

Ferner wird die erhaltene Mischung 26 aus erstem Dünnsaft und ausgefällten Nichtzuckerstoffen von einer weiteren zweiten Sensoreinrichtung 22' erfasst, um weitere zweite Messdaten betreffend die Mischung 26 aus erstem Dünnsaft und ausgefällten Nichtzuckerstoffen nach dem Karbonatisierungsschritt zu erhalten. Alternativ kann die weitere zweite Sensoreinrichtung 22' derart angeordnet sein, dass Messdaten während des Karbonatisierungsschritts 4' erfasst werden. Die weitere zweite Sensoreinrichtung 22' gemäß dem zweiten Ausführungsbeispiel umfasst eine optische Bilderfassungsvorrichtung, welche weitere zweite Bilddaten erfasst sowie eine Nahinfrarotspektroskopie-Vorrichtung, die Gehaltsangaben zu Inhaltsstoffen der Mischung 26 aus erstem Dünsaft und ausgefällten Nichtzuckerstoffen ermittelt. Dabei handelt es sich um folgende Inhaltsstoffe bzw. deren Gehalt: Sacharose, Fructose, Glucose, Milchsäure, Oxalsäure, Oxalate, Nitrate, Nitrite, Pektine, Dextrane, Stickstoff. In Abhängigkeit von dem ermittelten Gehalt an Dextran wird in der Saftreinigung eine Zugabemenge von Dextranase gesteuert. Ferner wird in Abhängigkeit von dem ermittelten Gehalt an Glucose die Extraktionszeit und/oder Extraktionstemperatur in dem Extraktionsschritt 2 eingestellt. In Abhängigkeit von dem ermittelten Glucosegehalt wird zudem eine Eindampftemperatur beim Eindicken 6 des zweiten Dünnsafts 27 und/oder eine Verweilzeit beim Eindicken 6 des zweiten Dünnsafts 27 und/oder eine Anzahl an Kristallisationsschritten beim Kristallisieren 7 des Dicksafts 18 eingestellt. Zudem kann anhand des ermittelten Gehalts an Pektinen und/oder Dextranen sowie der Bilddaten der optischen Bilderfassungsvorrichtung der weiteren zweiten Sensoreinrichtung 22' eine Zustandsangabe zu einem Zustand der zum Filtrieren 5 verwendeten Filtereinrichtungen, beispielsweise Filterkerzen, ermittelt werden.

Mit einer weiteren dritten Sensoreinrichtung 23' werden weitere dritte Messdaten betreffend den zweiten Dünnsaft 27 erfasst Die dritte Sensoreinrichtung 23 weist eine Nahinfrarotspektroskopie-Vorrichtung, die Gehaltsangaben zu Inhaltsstoffen des zweiten Dünnsafts 27 ermittelt sowie einen Trübungs- und/oder Farbsensor und einen Brix-Sensor auf. Die mit der weiteren dritten Sensoreinrichtung 23' erfassten Messdaten ermöglichen eine Qualitätskontrolle des Saftreinigungsprozesses 3, 4, 5, 3', 4', 5'.

Eine besonders bevorzugte Abwandlung des zweiten Ausführungsbeispiels umfasst
- genau eine erste Sensoreinrichtung 21 zur Erfassung erster Messdaten betreffend die Mischung aus Rohsaft und Kalkmilch 15 während oder nach dem ersten Kalkungsschritt 3, und
- genau eine zweite Sensoreinrichtung 22' zur Erfassung zweiter Messdaten betreffend die Mischung aus erstem Dünnsaft und ausgefällten Nichtzuckerstoffen 26 während oder nach dem zweiten Karbonatisierungsschritt 4' und
- genau eine dritte Sensoreinrichtung 23' zur Erfassung dritter Messdaten betreffend den zweiten Dünnsaft 27.

Durch die vorstehend beschriebenen Verfahren und Systeme mit den die Sensoreinrichtungen 21, 22, 23 wird die Analyse und/oder die Steuerung der Saftreinigung und/oder anderer Einrichtungen bzw. Verfahrensschritte im Zuckerproduktionsprozess mit geringer Latenz ermöglicht.

### Bezugszeichenliste

- 1: Verfahrensschritt "Schneiden"
- 2: Verfahrensschritt "Extraktion"
- 3: Verfahrensschritt "Kalkung"
- 4: Verfahrensschritt "Karbonatisierung" (2 stufig)
- 5: Verfahrensschritt "Filtration"
- 6: Verfahrensschritt "Eindickung"
- 7: Verfahrensschritt "Kristallisation"
- 8: Verfahrensschritt "Trennen"

- 10: Schneidemaschine
- 11: Zuckerrübenschnitzel
- 12: Wasser
- 13: Zuckerrübenschnitzelreste
- 14: Rohsaft
- 15: Mischung aus Rohsaft und Kalkmilch
- 16: Mischung aus Rohsaft und ausgefällten Nichtzuckerstoffen
- 17: Dünnsaft
- 18: Dicksaft
- 19: Mischung aus Dicksaft und Kristallzucker

- 21: Sensoreinrichtung
- 22: Sensoreinrichtung
- 23: Sensoreinrichtung

## Patentansprüche

1. Verfahren zur Erzeugung von Dünnsaft (17, 27) für die Herstellung von Zucker, wobei
einem Rohsaft (14) - in einem ersten Kalkungsschritt (3) - zunächst Kalkmilch zugegeben wird, um eine Mischung aus Rohsaft und Kalkmilch (15) zu erhalten, und
der Mischung aus Rohsaft und Kalkmilch (15) dann - in einem ersten Karbonatisierungsschritt (4) - Kohlendioxid zugegeben wird, um eine Mischung aus Rohsaft und ausgefällten Nichtzuckerstoffen (16) zu erhalten, und
die Mischung aus Rohsaft und ausgefällten Nichtzuckerstoffen (16) anschließend - in einem ersten Filtrierungsschritt (5) - gefiltert wird, um einen ersten Dünnsaft (17) zu erhalten,
optional dem ersten Dünnsaft (17) - in einem zweiten Kalkungsschritt (3') - Kalkmilch zugegeben wird, um eine Mischung aus erstem Dünnsaft und Kalkmilch (25) zu erhalten, und
optional dem ersten Dünnsaft (17) oder der Mischung aus erstem Dünnsaft und Kalkmilch (25) - in einem zweiten Karbonatisierungsschritt (4') - Kohlendioxid zugegeben wird, um eine Mischung aus erstem Dünnsaft und ausgefällten Nichtzuckerstoffen (26) zu erhalten und die Mischung aus erstem Dünnsaft und ausgefällten Nichtzuckerstoffen (26) - in einem zweiten Filtrierungsschritt (5') - gefiltert wird, um einen zweiten Dünnsaft (27) zu erhalten,
wobei
mit mindestens einer ersten Sensoreinrichtung (21) erste Messdaten betreffend die Mischung aus Rohsaft und Kalkmilch (15) und/oder die Mischung aus erstem Dünnsaft und Kalkmilch (25) während oder nach dem ersten bzw. zweiten Kalkungsschritt (3, 3') erfasst werden und/oder
mit mindestens einer zweiten Sensoreinrichtung (22) zweite Messdaten betreffend die Mischung aus Rohsaft und ausgefällten Nichtzuckerstoffen (16) und/oder die Mischung aus erstem Dünnsaft und ausgefällten Nichtzuckerstoffen (26) während oder nach dem ersten bzw. zweiten Karbonatisierungsschritt (4, 4') erfasst werden und/oder
mit mindestens einer dritten Sensoreinrichtung (23) dritte Messdaten betreffend den ersten und/oder zweiten Dünnsaft (17) erfasst werden,
**dadurch gekennzeichnet, dass**
die erste Sensoreinrichtung (21) eine erste optische Bilderfassungsvorrichtung aufweist und die ersten Messdaten erste Bilddaten umfassen und/oder
die zweite Sensoreinrichtung (22) eine zweite optische Bilderfassungsvorrichtung aufweist und die zweiten Messdaten zweite Bilddaten umfassen und/oder
die dritte Sensoreinrichtung (23) eine dritte optische Bilderfassungsvorrichtung aufweist und die dritten Messdaten dritte Bilddaten umfassen,
wobei anhand der ersten, zweiten und/oder dritten Bilddaten eine geometrische Eigenschaft der in dem jeweiligen Rohsaft bzw. dem Dünnsaft enthaltenen Partikel und/oder Lufteinschlüsse ermittelt wird.

2. Verfahren nach Anspruch 1, **dadurch gekennzeichnet, dass** mindestens ein Prozessparameter des ersten und/oder zweiten Kalkungsschritts (3, 3') in Abhängigkeit von den ersten Messdaten und/oder den zweiten Messdaten und/oder dritten Messdaten eingestellt wird.

3. Verfahren nach einem der vorhergehenden Ansprüche, **dadurch gekennzeichnet, dass** mindestens ein Prozessparameter des ersten und/oder zweiten Karbonatisierungsschritts (4, 4') in Abhängigkeit von den ersten Messdaten und/oder den zweiten Messdaten und/oder dritten Messdaten eingestellt wird.

4. Verfahren nach einem der vorhergehenden Ansprüche, **dadurch gekennzeichnet, dass** mindestens ein Prozessparameter des ersten und/oder zweiten Filtrierungsschritts (5, 5') in Abhängigkeit von den ersten Messdaten und/oder den zweiten Messdaten und/oder dritten Messdaten eingestellt wird.

5. Verfahren nach einem der vorhergehenden Ansprüche, **dadurch gekennzeichnet, dass** die geometrische Eigenschaft eine Flockenform ist.

6. Verfahren nach Anspruch 5, **dadurch gekennzeichnet, dass** anhand der ersten, zweiten und/oder dritten Bilddaten eine Farbe einer flüssigen Phase des jeweiligen Rohsafts bzw. Dünnsafts ermittelt wird.

7. Verfahren nach einem der Ansprüche 5 oder 6, **dadurch gekennzeichnet, dass** im ersten und/oder zweiten Kalkungsschritt (3, 3') eine Kalkmilchzugabemenge in Abhängigkeit von der ermittelten Flockenform der Partikel und/oder der ermittelten Farbe der flüssigen Phase eingestellt wird, und/oder dass eine Zugabemenge an Dextranase in Abhängigkeit von der ermittelten Flockenform der Partikel und/oder der ermittelten Farbe der flüssigen Phase eingestellt wird.

8. Verfahren nach einem der vorhergehenden Ansprüche, **dadurch gekennzeichnet, dass**
die erste Sensoreinrichtung (21) eine erste Nahinfrarotspektroskopie-Vorrichtung aufweist und die ersten Messdaten eine erste Gehaltsangabe eines Inhaltsstoffs umfassen und/oder
die zweite Sensoreinrichtung (22) eine zweite Nahinfrarotspektroskopie-Vorrichtung aufweist und die zweiten Messdaten eine zweite Gehaltsangabe eines Inhaltsstoffs umfassen und/oder
die dritte Sensoreinrichtung (23) eine dritte Nahinfrarotspektroskopie-Vorrichtung aufweist und die dritten Messdaten eine dritte Gehaltsangabe eines Inhaltsstoffs umfassen.

9. Verfahren nach einem der vorhergehenden Ansprüche, **dadurch gekennzeichnet, dass** die erste, zweite und/oder dritten Messdaten eine Gehaltsangabe der Pektine und/oder Dextrane umfassen, wobei anhand der Gehaltsangabe der Pektine und/oder Dextrane eine Zustandsangabe zu einem Zustand einer oder mehrerer Filtereinrichtungen, beispielsweise Filterkerzen, ermittelt wird, die in dem Filtrierungsschritt verwendet werden.

10. Verfahren nach einem der vorhergehenden Ansprüche, **dadurch gekennzeichnet, dass**
die erste Sensoreinrichtung (21) einen ersten Stickstoffsensor aufweist und die ersten Messdaten eine erste Stickstoffkonzentration umfassen und/oder
die zweite Sensoreinrichtung (22) einen zweiten Stickstoffsensor aufweist und die zweiten Messdaten eine zweite Stickstoffkonzentration umfassen und/oder
die dritte Sensoreinrichtung (23) eine dritten Stickstoffsensor aufweist und die dritten Messdaten eine dritte Stickstoffkonzentration umfassen.

11. Verfahren nach einem der vorhergehenden Ansprüche, **dadurch gekennzeichnet, dass**
die dritte Sensoreinrichtung (23) einen Trübungs- und/oder Farbsensor aufweist und die dritten Messdaten eine Trübungs- und/oder Farbangabe umfassen.

12. Verfahren nach Anspruch 11, **dadurch gekennzeichnet, dass** ein Prozessparameter des ersten und/oder zweiten Filtrierungsschritts (5, 5') in Abhängigkeit von der Trübungs- und/oder Farbangabe eingestellt wird.

13. Verfahren nach einem der vorhergehenden Ansprüche, **dadurch gekennzeichnet, dass**
die dritte Sensoreinrichtung (23) einen Brix-Sensor aufweist und die dritten Messdaten einen Zuckergehalt umfassen.

14. Verfahren zur Herstellung von Zucker, wobei gemäß einem Verfahren nach einem der vorhergehenden Ansprüche Dünnsaft (17, 27) hergestellt wird und in nachfolgenden Prozessschritten aus dem Dünnsaft (17, 27) Zucker hergestellt wird, wobei mindestens ein Prozessparameter eines der nachfolgenden Prozessschritte in Abhängigkeit von den ersten Messdaten und/oder den zweiten Messdaten und/oder dritten Messdaten eingestellt wird, wobei der nachfolgende Prozessschritt ein Eindickungsschritt (6) oder ein Kristallisationsschritt (7) oder ein Trennschritt (8) ist; und/oder wobei zur Bereitstellung des Rohsafts (14) ein Extraktionsschritt (2) durchgeführt wird, um den Rohsaft (14) aus Zuckerrübenschnitzeln (11) zu erhalten, wobei mindestens ein Prozessparameter des Extraktionsschritts in Abhängigkeit von den ersten Messdaten und/oder den zweiten Messdaten und/oder dritten Messdaten eingestellt wird.

15. Zuckerproduktionsanlage mit einer Einrichtung zur Saftreinigung, die dazu eingerichtet ist,
einem Rohsaft (14) - in einem ersten Kalkungsschritt (3) - zunächst Kalkmilch zuzugeben, um eine Mischung aus Rohsaft und Kalkmilch (15) zu erhalten, und
der Mischung aus Rohsaft und Kalkmilch (15) dann - in einem ersten Karbonatisierungsschritt (4) - Kohlendioxid zuzugeben, um eine Mischung aus Rohsaft und ausgefällten Nichtzuckerstoffen (16) zu erhalten, und
die Mischung aus Rohsaft und ausgefällten Nichtzuckerstoffen (16) anschließend - in einem ersten Filtrierungsschritt (5) - zu filtern, um einen ersten Dünnsaft (17) zu erhalten,
optional dem ersten Dünnsaft (17) - in einem zweiten Kalkungsschritt (3') - Kalkmilch zugegeben wird, um eine Mischung aus erstem Dünnsaft und Kalkmilch (25) zu erhalten, und
optional dem ersten Dünnsaft (17) oder der Mischung aus erstem Dünnsaft und Kalkmilch (25) - in einem zweiten Karbonatisierungsschritt (4') - Kohlendioxid zugegeben wird, um eine Mischung aus erstem Dünnsaft und ausgefällten Nichtzuckerstoffen (26) zu erhalten und die Mischung aus erstem Dünnsaft und ausgefällten Nichtzuckerstoffen (26) - in einem zweiten Filtrierungsschritt (5') - gefiltert wird, um einen zweiten Dünnsaft (27) zu erhalten,
aufweisend
mindestens eine erste Sensoreinrichtung (21, 21') zur Erfassung erster Messdaten betreffend die Mischung aus Rohsaft und Kalkmilch (15) und/oder die Mischung aus erstem Dünnsaft und Kalkmilch (25) während oder nach dem ersten bzw. zweiten Kalkungsschritt (3, 3') und/oder
mindestens eine zweite Sensoreinrichtung (22, 22') zur Erfassung zweiter Messdaten betreffend die Mischung aus Rohsaft und ausgefällten Nichtzuckerstoffen (16) und/oder die Mischung aus erstem Dünnsaft und ausgefällten Nichtzuckerstoffen (26) während oder nach dem ersten bzw. zweiten Karbonatisierungsschritt (4, 4') und/oder
mindestens eine dritte Sensoreinrichtung (23, 23') zur Erfassung dritter Messdaten betreffend den ersten und/oder zweiten Dünnsaft (17, 27),
**dadurch gekennzeichnet, dass**
die erste Sensoreinrichtung (21) eine erste optische Bilderfassungsvorrichtung aufweist und die ersten Messdaten erste Bilddaten umfassen und/oder
die zweite Sensoreinrichtung (22) eine zweite optische Bilderfassungsvorrichtung aufweist und die zweiten Messdaten zweite Bilddaten umfassen und/oder
die dritte Sensoreinrichtung (23) eine dritte optische Bilderfassungsvorrichtung aufweist und die dritten Messdaten dritte Bilddaten umfassen,
wobei anhand der ersten, zweiten und/oder dritten Bilddaten eine geometrische Eigenschaft der in dem jeweiligen Rohsaft bzw. dem Dünnsaft enthaltenen Partikel und/oder Lufteinschlüsse ermittelbar ist.

## Claims

1. Method for producing thin juice (17, 27) for the manufacture of sugar, wherein
to a raw juice (14) - in a first liming step (3) - milk of lime is first added to obtain a mixture of raw juice and milk of lime (15), and
to the mixture of raw juice and milk of lime (15) - in a first carbonation step (4) - carbon dioxide is then added to obtain a mixture of raw juice and precipitated non-sugars (16), and
the mixture of raw juice and precipitated non-sugars (16) is subsequently - in a first filtration step (5) - filtered to obtain a first thin juice (17),
optionally, to the first thin juice (17) - in a second liming step (3') - milk of lime is added to obtain a mixture of first thin juice and milk of lime (25), and
optionally, to the first thin juice (17) or the mixture of first thin juice and milk of lime (25) - in a second carbonation step (4') - carbon dioxide is added to obtain a mixture of first thin juice and precipitated non-sugars (26), and the mixture of first thin juice and precipitated non-sugars (26) - in a second filtration step (5') - is filtered to obtain a second thin juice (27), wherein
by means of at least one first sensor device (21), first measurement data relating to the mixture of raw juice and milk of lime (15) and/or the mixture of first thin juice and milk of lime (25) are acquired during or after the first and second liming step (3, 3') respectively, and/or
by means of at least one second sensor device (22), second measurement data relating to the mixture of raw juice and precipitated non-sugars (16) and/or the mixture of first thin juice and precipitated non-sugars (26) are acquired during or after the first and second carbonation step (4, 4') respectively, and/or
by means of at least one third sensor device (23), third measurement data relating to the first and/or second thin juice (17) are acquired,
**characterised in that**
the first sensor device (21) comprises a first optical image acquisition device and the first measurement data comprise first image data, and/or
the second sensor device (22) comprises a second optical image acquisition device and the second measurement data comprise second image data, and/or
the third sensor device (23) comprises a third optical image acquisition device and the third measurement data comprise third image data,
wherein a geometric property of the particles and/or air inclusions contained in the respective raw juice or thin juice is determined on the basis of the first, second and/or third image data.

2. Method according to claim 1, **characterised in that** at least one process parameter of the first and/or second liming step (3, 3') is set in dependence on the first measurement data and/or the second measurement data and/or the third measurement data.

3. Method according to any of the preceding claims, **characterised in that** at least one process parameter of the first and/or second carbonation step (4, 4') is set in dependence on the first measurement data and/or the second measurement data and/or the third measurement data.

4. Method according to any of the preceding claims, **characterised in that** at least one process parameter of the first and/or second filtration step (5, 5') is set in dependence on the first measurement data and/or the second measurement data and/or the third measurement data.

5. Method according to any of the preceding claims, **characterised in that** the geometric property is a floc shape.

6. Method according to claim 5, **characterised in that** a colour of a liquid phase of the respective raw juice or thin juice is determined on the basis of the first, second and/or third image data.

7. Method according to any of claims 5 or 6, **characterised in that** in the first and/or second liming step (3, 3') a milk of lime addition quantity is set in dependence on the determined floc shape of the particles and/or the determined colour of the liquid phase, and/or that an addition quantity of dextranase is set in dependence on the determined floc shape of the particles and/or the determined colour of the liquid phase.

8. Method according to any of the preceding claims, **characterised in that**
the first sensor device (21) comprises a first near-infrared spectroscopy device and the first measurement data comprise a first content specification of a constituent, and/or
the second sensor device (22) comprises a second near-infrared spectroscopy device and the second measurement data comprise a second content specification of a constituent, and/or
the third sensor device (23) comprises a third near-infrared spectroscopy device and the third measurement data comprise a third content specification of a constituent.

9. Method according to any of the preceding claims, **characterised in that** the first, second and/or third measurement data comprise a content specification of pectins and/or dextrans, wherein on the basis of the content specification of pectins and/or dextrans a condition indication relating to a condition of one or more filter devices, for example filter candles, used in the filtration step is determined.

10. Method according to any of the preceding claims, **characterised in that**
the first sensor device (21) comprises a first nitrogen sensor and the first measurement data comprise a first nitrogen concentration, and/or
the second sensor device (22) comprises a second nitrogen sensor and the second measurement data comprise a second nitrogen concentration, and/or
the third sensor device (23) comprises a third nitrogen sensor and the third measurement data comprise a third nitrogen concentration.

11. Method according to any of the preceding claims, **characterised in that**
the third sensor device (23) comprises a turbidity and/or colour sensor and the third measurement data comprise a turbidity value and/or a colour value.

12. Method according to claim 11, **characterised in that** a process parameter of the first and/or second filtration step (5, 5') is set in dependence on the turbidity value and/or the colour value.

13. Method according to any of the preceding claims, **characterised in that**
the third sensor device (23) comprises a Brix sensor and the third measurement data comprise a sugar content.

14. Method for the manufacture of sugar, wherein thin juice (17, 27) is produced according to a method according to any of the preceding claims, and sugar is produced from the thin juice (17, 27) in subsequent process steps, wherein at least one process parameter of one of the subsequent process steps is set in dependence on the first measurement data and/or the second measurement data and/or the third measurement data, the subsequent process step being a thickening step (6) or a crystallisation step (7) or a separation step (8); and/or wherein for the provision of the raw juice (14) an extraction step (2) is carried out to obtain the raw juice (14) from sugar beet cossettes (11), wherein at least one process parameter of the extraction step is set in dependence on the first measurement data and/or the second measurement data and/or the third measurement data.

15. Sugar production plant having a juice purification device configured to
add to a raw juice (14) - in a first liming step (3) - milk of lime first, to obtain a mixture of raw juice and milk of lime (15), and
add to the mixture of raw juice and milk of lime (15) - in a first carbonation step (4) - carbon dioxide, to obtain a mixture of raw juice and precipitated non-sugars (16), and
subsequently filter - in a first filtration step (5) - the mixture of raw juice and precipitated non-sugars (16), to obtain a first thin juice (17),
optionally, to the first thin juice (17) - in a second liming step (3') - milk of lime is added to obtain a mixture of first thin juice and milk of lime (25), and
optionally, to the first thin juice (17) or the mixture of first thin juice and milk of lime (25) - in a second carbonation step (4') - carbon dioxide is added to obtain a mixture of first thin juice and precipitated non-sugars (26), and the mixture of first thin juice and precipitated non-sugars (26) - in a second filtration step (5') - is filtered to obtain a second thin juice (27),
comprising
at least one first sensor device (21, 21') for acquiring first measurement data relating to the mixture of raw juice and milk of lime (15) and/or the mixture of first thin juice and milk of lime (25) during or after the first and second liming step (3, 3') respectively, and/or
at least one second sensor device (22, 22') for acquiring second measurement data relating to the mixture of raw juice and precipitated non-sugars (16) and/or the mixture of first thin juice and precipitated non-sugars (26) during or after the first and second carbonation step (4, 4') respectively, and/or
at least one third sensor device (23, 23') for acquiring third measurement data relating to the first and/or second thin juice (17, 27),
**characterised in that**
the first sensor device (21) comprises a first optical image acquisition device and the first measurement data comprise first image data, and/or
the second sensor device (22) comprises a second optical image acquisition device and the second measurement data comprise second image data, and/or
the third sensor device (23) comprises a third optical image acquisition device and the third measurement data comprise third image data,
wherein a geometric property of the particles and/or air inclusions contained in the respective raw juice or thin juice is determinable on the basis of the first, second and/or third image data.

## Revendications

1. Procédé de production de jus mince (17, 27) pour la fabrication de sucre, dans lequel
du lait de chaux est d'abord ajouté à un jus brut (14) - lors d'une première étape de chaulage (3) - afin d'obtenir un mélange de jus brut et de lait de chaux (15), et
du dioxyde de carbone est ensuite ajouté au mélange de jus brut et de lait de chaux (15) - lors d'une première étape de carbonatation (4) - afin d'obtenir un mélange de jus brut et de non-sucres précipités (16), et
le mélange de jus brut et de non-sucres précipités (16) est ensuite filtré - lors d'une première étape de filtration (5) - afin d'obtenir un premier jus mince (17),
optionnellement, du lait de chaux est ajouté au premier jus mince (17) - lors d'une deuxième étape de chaulage (3') - afin d'obtenir un mélange de premier jus mince et de lait de chaux (25), et
optionnellement, du dioxyde de carbone est ajouté au premier jus mince (17) ou au mélange de premier jus mince et de lait de chaux (25) - lors d'une deuxième étape de carbonatation (4') - afin d'obtenir un mélange de premier jus mince et de non-sucres précipités (26), et le mélange de premier jus mince et de non-sucres précipités (26) est filtré - lors d'une deuxième étape de filtration (5') - afin d'obtenir un deuxième jus mince (27), dans lequel
au moyen d'au moins un premier dispositif de détection (21), des premières données de mesure relatives au mélange de jus brut et de lait de chaux (15) et/ou au mélange de premier jus mince et de lait de chaux (25) sont acquises pendant ou après la première ou la deuxième étape de chaulage (3, 3') respectivement, et/ou
au moyen d'au moins un deuxième dispositif de détection (22), des deuxièmes données de mesure relatives au mélange de jus brut et de non-sucres précipités (16) et/ou au mélange de premier jus mince et de non-sucres précipités (26) sont acquises pendant ou après la première ou la deuxième étape de carbonatation (4, 4') respectivement, et/ou
au moyen d'au moins un troisième dispositif de détection (23), des troisièmes données de mesure relatives au premier et/ou au deuxième jus mince (17) sont acquises,
**caractérisé en ce que**
le premier dispositif de détection (21) comprend un premier dispositif optique d'acquisition d'images et les premières données de mesure comprennent des premières données d'image, et/ou
le deuxième dispositif de détection (22) comprend un deuxième dispositif optique d'acquisition d'images et les deuxièmes données de mesure comprennent des deuxièmes données d'image, et/ou
le troisième dispositif de détection (23) comprend un troisième dispositif optique d'acquisition d'images et les troisièmes données de mesure comprennent des troisièmes données d'image,
une propriété géométrique des particules et/ou des inclusions d'air contenues dans le jus brut ou le jus mince respectif étant déterminée sur la base des premières, deuxièmes et/ou troisièmes données d'image.

2. Procédé selon la revendication 1, **caractérisé en ce qu'**au moins un paramètre de procédé de la première et/ou de la deuxième étape de chaulage (3, 3') est réglé en fonction des premières données de mesure et/ou des deuxièmes données de mesure et/ou des troisièmes données de mesure.

3. Procédé selon l'une des revendications précédentes, **caractérisé en ce qu'**au moins un paramètre de procédé de la première et/ou de la deuxième étape de carbonatation (4, 4') est réglé en fonction des premières données de mesure et/ou des deuxièmes données de mesure et/ou des troisièmes données de mesure.

4. Procédé selon l'une des revendications précédentes, **caractérisé en ce qu'**au moins un paramètre de procédé de la première et/ou de la deuxième étape de filtration (5, 5') est réglé en fonction des premières données de mesure et/ou des deuxièmes données de mesure et/ou des troisièmes données de mesure.

5. Procédé selon l'une des revendications précédentes, **caractérisé en ce que** la propriété géométrique est une forme de flocs.

6. Procédé selon la revendication 5, **caractérisé en ce qu'**une couleur d'une phase liquide du jus brut ou du jus mince respectif est déterminée sur la base des premières, deuxièmes et/ou troisièmes données d'image.

7. Procédé selon l'une des revendications 5 ou 6, **caractérisé en ce que** lors de la première et/ou de la deuxième étape de chaulage (3, 3'), une quantité d'ajout de lait de chaux est réglée en fonction de la forme de flocs déterminée des particules et/ou de la couleur déterminée de la phase liquide, et/ou qu'une quantité d'ajout de dextranase est réglée en fonction de la forme de flocs déterminée des particules et/ou de la couleur déterminée de la phase liquide.

8. Procédé selon l'une des revendications précédentes, **caractérisé en ce que**
le premier dispositif de détection (21) comprend un premier dispositif de spectroscopie proche infrarouge et les premières données de mesure comprennent une première indication de teneur d'un constituant, et/ou
le deuxième dispositif de détection (22) comprend un deuxième dispositif de spectroscopie proche infrarouge et les deuxièmes données de mesure comprennent une deuxième indication de teneur d'un constituant, et/ou
le troisième dispositif de détection (23) comprend un troisième dispositif de spectroscopie proche infrarouge et les troisièmes données de mesure comprennent une troisième indication de teneur d'un constituant.

9. Procédé selon l'une des revendications précédentes, **caractérisé en ce que** les premières, deuxièmes et/ou troisièmes données de mesure comprennent une indication de teneur en pectines et/ou en dextrans, une indication d'état relative à un état d'un ou plusieurs dispositifs de filtration, par exemple des bougies filtrantes, utilisés dans l'étape de filtration, étant déterminée sur la base de l'indication de teneur en pectines et/ou en dextrans.

10. Procédé selon l'une des revendications précédentes, **caractérisé en ce que**
le premier dispositif de détection (21) comprend un premier capteur d'azote et les premières données de mesure comprennent une première concentration en azote, et/ou
le deuxième dispositif de détection (22) comprend un deuxième capteur d'azote et les deuxièmes données de mesure comprennent une deuxième concentration en azote, et/ou
le troisième dispositif de détection (23) comprend un troisième capteur d'azote et les troisièmes données de mesure comprennent une troisième concentration en azote.

11. Procédé selon l'une des revendications précédentes, **caractérisé en ce que**
le troisième dispositif de détection (23) comprend un capteur de turbidité et/ou de couleur et les troisièmes données de mesure comprennent une valeur de turbidité et/ou une valeur de couleur.

12. Procédé selon la revendication 11, **caractérisé en ce qu'**un paramètre de procédé de la première et/ou de la deuxième étape de filtration (5, 5') est réglé en fonction de la valeur de turbidité et/ou de la valeur de couleur.

13. Procédé selon l'une des revendications précédentes, **caractérisé en ce que**
le troisième dispositif de détection (23) comprend un capteur Brix et les troisièmes données de mesure comprennent une teneur en sucre.

14. Procédé de fabrication de sucre, dans lequel du jus mince (17, 27) est produit selon un procédé selon l'une des revendications précédentes et du sucre est fabriqué à partir du jus mince (17, 27) lors d'étapes de procédé subséquentes, au moins un paramètre de procédé de l'une des étapes de procédé subséquentes étant réglé en fonction des premières données de mesure et/ou des deuxièmes données de mesure et/ou des troisièmes données de mesure, l'étape de procédé subséquente étant une étape d'évaporation (6) ou une étape de cristallisation (7) ou une étape de séparation (8) ; et/ou dans lequel, pour la mise à disposition du jus brut (14), une étape d'extraction (2) est réalisée afin d'obtenir le jus brut (14) à partir de cossettes de betteraves sucrières (11), au moins un paramètre de procédé de l'étape d'extraction étant réglé en fonction des premières données de mesure et/ou des deuxièmes données de mesure et/ou des troisièmes données de mesure.

15. Installation de production de sucre comprenant un dispositif d'épuration du jus, configuré pour
ajouter d'abord du lait de chaux à un jus brut (14) - lors d'une première étape de chaulage (3) - afin d'obtenir un mélange de jus brut et de lait de chaux (15), et
ajouter du dioxyde de carbone au mélange de jus brut et de lait de chaux (15) - lors d'une première étape de carbonatation (4) - afin d'obtenir un mélange de jus brut et de non-sucres précipités (16), et
filtrer ensuite - lors d'une première étape de filtration (5) - le mélange de jus brut et de non-sucres précipités (16) afin d'obtenir un premier jus mince (17),
optionnellement, du lait de chaux est ajouté au premier jus mince (17) - lors d'une deuxième étape de chaulage (3') - afin d'obtenir un mélange de premier jus mince et de lait de chaux (25), et
optionnellement, du dioxyde de carbone est ajouté au premier jus mince (17) ou au mélange de premier jus mince et de lait de chaux (25) - lors d'une deuxième étape de carbonatation (4') - afin d'obtenir un mélange de premier jus mince et de non-sucres précipités (26), et le mélange de premier jus mince et de non-sucres précipités (26) est filtré - lors d'une deuxième étape de filtration (5') - afin d'obtenir un deuxième jus mince (27),
comprenant
au moins un premier dispositif de détection (21, 21') pour l'acquisition de premières données de mesure relatives au mélange de jus brut et de lait de chaux (15) et/ou au mélange de premier jus mince et de lait de chaux (25) pendant ou après la première ou la deuxième étape de chaulage (3, 3') respectivement, et/ou
au moins un deuxième dispositif de détection (22, 22') pour l'acquisition de deuxièmes données de mesure relatives au mélange de jus brut et de non-sucres précipités (16) et/ou au mélange de premier jus mince et de non-sucres précipités (26) pendant ou après la première ou la deuxième étape de carbonatation (4, 4') respectivement, et/ou
au moins un troisième dispositif de détection (23, 23') pour l'acquisition de troisièmes données de mesure relatives au premier et/ou au deuxième jus mince (17, 27),
**caractérisé en ce que**
le premier dispositif de détection (21) comprend un premier dispositif optique d'acquisition d'images et les premières données de mesure comprennent des premières données d'image, et/ou
le deuxième dispositif de détection (22) comprend un deuxième dispositif optique d'acquisition d'images et les deuxièmes données de mesure comprennent des deuxièmes données d'image, et/ou
le troisième dispositif de détection (23) comprend un troisième dispositif optique d'acquisition d'images et les troisièmes données de mesure comprennent des troisièmes données d'image,
une propriété géométrique des particules et/ou des inclusions d'air contenues dans le jus brut ou le jus mince respectif étant déterminable sur la base des premières, deuxièmes et/ou troisièmes données d'image.
